# EUROPÄISCHE PATENTSCHRIFT

(11) **EP 2 096 296 B1**
(45) Veröffentlichungstag und Bekanntmachung des Hinweises auf die Patenterteilung: **26.01.2011**
(21) Anmeldenummer: 08102140.4
(22) Anmeldetag: 29.02.2008
(51) Int. Cl.: F02M 35/02

(54) **Filtergehäuse**
Filter casing
Boîtier de filtre

(43) Veröffentlichungstag der Anmeldung: 02.09.2009
(73) Patentinhaber: MANN+HUMMEL GmbH, 71638 Ludwigsburg (DE)
(72) Erfinder: Bauder, Ralf, 68775, Ketsch (DE); Dworatzek, Klemens, 68535, Edingen (DE)

(56) Entgegenhaltungen:
- EP-A- 1 101 928
- EP-A- 1 132 611
- EP-A- 1 661 614
- DE-A1- 2 243 258
- DE-A1- 3 336 882
- GB-A- 1 053 111

## Beschreibung

### Technisches Gebiet

Die Erfindung betrifft ein Filtergehäuse insbesondere eines Luftfilters für Kraftfahrzeuge mit den Merkmalen nach dem Oberbegriff des Anspruchs 1.

### Stand der Technik

Filtergehäuse, insbesondere eines Luftfilters für Kraftfahrzeuge, weisen in vorbekannter Bauform zwei lösbar miteinander verbundene Gehäuseteile auf, die sich im montierten Zustand entlang einer gemeinsamen Längsachse erstrecken und dabei insbesondere etwa zylinderförmig ausgebildet sind. Eines der beiden Gehäuseteile ist ortsfest montiert, während das weitere Gehäuseteil als Deckel bedarfsweise demontierbar ist, um ein innenliegendes Filterelement austauschen zu können. Als Beispiele hierfür sind die EP 1 101 928 A1, die GB 1,053,111 oder die EP 1 661 614 A1 zu nennen. Für die lösbare Verbindung der beiden Gehäuseteile sind verschiedene Bauformen bekannt. Es können Gewinde- oder Bajonettverschlüsse vorgesehen sein, die bei der Montage des Deckelteils eine Relativverdrehung des Deckelteils gegenüber dem feststehenden Gehäuseteil erforderlich machen. Dies setzt innerhalb gewisser Grenzen eine freie Verdrehbarkeit des Deckelteils gegenüber dem ortsfesten Gehäuseteil voraus. Angeschlossene Schläuche oder dergleichen beispielsweise für einen Staubaustrag schränken eine solche Drehbewegung ein. Alternativ kann auch eine axiale Steckverbindung vorgesehen sein, die durch Kniehebel oder dergleichen fixiert wird. Häufig sind räumlich beengte Einbaubedingungen anzutreffen, die die Betätigung solcher Kniehebel erschweren. In allen vorgenannten Fällen gibt die Verbindung eine feste Drehwinkelstellung des Deckelteils gegenüber dem unteren Gehäuseteil vor, so dass Lageanpassungen an die räumlichen Bedingungen erschwert sind.

Bei den vorgenannten Anordnungen erfolgt ein Öffnen entgegengesetzt zur Schließrichtung. Die Schließ-, Öffnungs- und Haltekräfte beeinflussen sich gegenseitig und sind nur schwierig aufeinander abzustimmen.

Der Erfindung liegt die Aufgabe zugrunde, ein Filtergehäuse derart weiterzubilden, dass sein Deckel leichter zu montieren bzw. zu demontieren ist.

Diese Aufgabe wird durch ein Filtergehäuse mit den Merkmalen des Anspruchs 1 gelöst.

### Offenbarung der Erfindung

Es wird ein Filtergehäuse vorgeschlagen, bei dem eine in Richtung seiner Längsachse wirkende Rastverbindung zwischen beiden Gehäuseteilen vorgesehen ist, wobei die Rastverbindung in mindestens einer Drehrichtung des einen Gehäuseteils um die Längsachse relativ zum anderen Gehäuseteil lösbar ist.

Die vorgeschlagene Anordnung ermöglicht es, das eine als Deckelteil ausgebildete Gehäuseteil axial, also parallel zur Längsachse auf das weitere, im Regelfall ortsfeste Gehäuseteil aufzustecken, wobei mit der axialen Aufsteckbewegung die Rastverbindung eingreift. Ohne weiteres Zutun, also ohne Betätigung von Hebeln oder dergleichen sind die beiden Gehäuseteile allein in Folge der axialen Aufsteckbewegung gegeneinander in Richtung der Längsachse rastend fixiert. Eine Drehbewegung ist nicht erforderlich, so dass angeschlossene Schläuche oder dergleichen den Montagevorgang nicht behindern. Bei einer entsprechenden Ausgestaltung der axialen Rastverbindung können während des Aufsteckvorganges Winkelkorrekturen vorgenommen werden. Insbesondere kann ein Aufstecken in unterschiedlichen, an die jeweilige Einbausituation angepassten relativen Drehwinkellagen erfolgen.

Ein Lösen der Rastverbindung erfolgt jedoch nicht in Richtung der Längsachse, sondern durch eine Relativverdrehung der beiden Gehäuseteile gegeneinander in mindestens einer Drehrichtung. Für die Herstellung der Verbindung und deren Lösung sind also zwei verschiedene Bewegungsfreiheitsgrade gewählt. Dies ermöglicht es, die auftretenden Schließ-, Öffnungs- und Haltekräfte unabhängig voneinander und ohne gegenseitige Beeinflussung konstruktiv festzulegen. Bei einer geeigneten Ausgestaltung der axialen Rastverbindung kann diese mit geringen Schließkräften in Eingriff gebracht werden und dabei hohe axiale Haltekräfte erzeugen. Unabhängig davon erfolgt in Drehrichtung, also quer zu den axialen Haltekräften ein Lösen des einen Gehäuseteiles vom anderen Gehäuseteil. Dies kann trotz der hohen Haltekräfte der Rastverbindung mit geringen Handkräften erfolgen. Eine geeignete Drehsicherung vermeidet ein unbeabsichtigtes Lösen. Bei entsprechender Ausgestaltung der Drehsicherung werden die angestrebten Schließ- und Haltekräfte in der Axialrichtung nicht beeinflusst. Das Schließen und das Öffnen der Verbindung zwischen beiden Gehäuseteilen kann selbst unter räumlich beengten Bedingungen einfach und mit geringem Kraftaufwand erfolgen.

Erfindungsgemäß ist zur Bildung der Rastverbindung mindestens ein in einer Radialrichtung elastisch auslenkbarer Rasthaken des einen Gehäuseteils vorgesehen, der mindestens eine zugeordnete Rastkante des anderen Gehäuseteils in Richtung der Längsachse wirkend hintergreift, wobei der mindestens eine Rasthaken und die mindestens eine Rastkante bezogen auf die mindestens eine lösende Drehrichtung jeweils ein freies Ende aufweisen. Der elastisch auslenkbare Rasthaken kann mit geringen Montagekräften in Eingriff mit der zugeordneten Rastkante gebracht werden, wobei sich trotz der geringen Montagekräfte im verrasteten Zustand hohe axiale Haltekräfte einstellen. Die in der lösenden Drehrichtung freien Enden der Rasthaken und Rastkanten ermöglichen eine freie Verdrehbarkeit der beiden Gehäuseteile gegen einander bis zu einer Drehwinkelstellung, in der der Eingriff der Rasthaken in die zugeordneten Rastkanten aufgehoben ist. In dieser Drehwinkelstellung kann das eine Gehäuseteil vom anderen Gehäuseteil ohne nennenswerten Kraftaufwand abgezogen werden.

In bevorzugter Weiterbildung weisen der mindestens eine Rasthaken und/oder die mindestens eine Rastkante einen entgegen der lösenden Drehrichtung wirkenden Drehanschlag auf. Zur Vermeidung von Fehlbedienungen ergibt sich hieraus nur eine einzige lösende Drehrichtung. In der entgegengesetzten Drehrichtung verhindert der Drehanschlag, dass die Rasthaken und Rastkanten außer Eingriff geraten. Vielmehr kann der Benutzer anhand des Drehanschlages eine Drehwinkelstellung ertasten, in der ein vollständiger Eingriff der Rastverbindung sichergestellt ist. Durch entsprechende räumliche Anordnung des Drehanschlages kann auch eine bevorzugte Drehwinkelstellung des abnehmbaren Gehäusestiels relativ zum Gesamtsystem vorgegeben werden, in der eine fehlerfreie Funktion des Luftfilters sichergestellt ist.

Vorteilhaft sind mindestens zwei und insbesondere drei gleichmäßig über den Umfang des Filtergehäuses verteilte Gruppen von Rasthaken und zugeordneten Rastkanten vorgesehen, wobei in einer Umfangsrichtung zwischen den Gruppen von Rastkanten Freiräume zur axialen Hindurchführung der Rasthaken angeordnet sind. Die auftretenden Haltekräfte sind gleichmäßig auf die jeweiligen Gruppen von Rasthaken und Rastkanten verteilt. Eine verkantete Montage und eine Überbeanspruchung einzelner Rastelemente sind vermieden. Zum Lösen erfolgt eine Drehbewegung des einen Gehäuseteils gegenüber dem anderen Gehäuseteil, bis die einzelnen Gruppen der Rasthaken in Überdeckung mit den Freiräumen zwischen den Gruppen von Rastkanten zu liegen kommen. In dieser Drehwinkelstellung ist die Rastverbindung sämtlicher Gruppen gleichzeitig aufgehoben. Das zu lösende Gehäuseteil kann mit geringem Kraftaufwand vom anderen Gehäuseteil parallel zur Längsachse, also in der axialen Richtung abgezogen werden.

In zweckmäßiger Weiterbildung ist mindestens ein Freiraum in der lösenden Drehrichtung durch einen Drehanschlag begrenzt. Dieser Drehanschlag erleichtert dem Benutzer das Auffinden derjenigen Drehwinkelstellung, in der die Rastverbindung außer Eingriff gebracht ist, und in der das eine Gehäuseteil vom anderen Gehäuseteil ungehindert in der Axialrichtung abgezogen werden kann.

In einer bevorzugten Ausführung sind bezogen auf die Längsachse mindestens zwei und insbesondere vier Rasthaken aufeinanderfolgend angeordnet. Des erlaubt eine zuverlässige Montage auch bei leicht verkantetem Ansetzen des einen Gehäuseteils gegenüber dem anderen Gehäuseteil. Selbst bei leicht verkantetem Ansatz greift zunächst ein Teil der Rasthaken und Rastkanten ineinander, wodurch die beiden Gehäuseteile zunächst provisorisch gegeneinander fixiert sind. Anschließend können die beiden Gehäuseteile axial gegeneinander so weit gedrückt werden, bis sämtliche Rasthaken sämtliche Rastkanten vollständig hintergreifen, wodurch eine verkantungsfreie Befestigung mit hohen Haltkräften sichergestellt ist.

In einer bevorzugten Ausführung weisen die Rastkanten bezogen auf die Umfangsrichtung eine größere Erstreckung auf als die zugehörigen Rasthaken. Insbesondere erstrecken sich die Rasthaken und die zugehörigen Freiräume zwischen den Rastkanten bezogen auf die Umfangsrichtung über einen Winkel von etwa 10°, wobei die Freiräume gegenüber den Rasthaken ein geringes Übermaß aufweisen. Diese Anordnung erlaubt ein sicheres Aufstecken des einen Gehäuseteils auf das andere Gehäuseteil in unterschiedlichen relativen Drehwinkeln. Für den Benutzer ist es nicht erforderlich, bei der Montage eine exakte Drehwinkellage aufzufinden. Bei der Montage sich einstellende leichte Drehwinkelfehler können nach Herstellung der Rastverbindung durch entsprechende Drehbewegungen ohne weiteres korrigiert werden. In Verbindung mit beispielsweise drei Gruppen von Rasthaken und Rastkanten ist zum Lösen der Rastverbindung maximal ein Drehwinkel von nur 110° erforderlich, was unter den üblichen Einbaubedingungen die Abnahme des Deckels selbst bei angeschlossenen Schlauchleitungen vereinfacht. Das geringe Übermaß der Freiräume gegenüber den Rasthaken stellt ein freies, unbehindertes Abziehen des einen Gehäuseteils vom anderen Gehäuseteil in der Axialrichtung sicher.

In zweckmäßiger Weiterbildung weisen die beiden Gehäuseteile je einen insbesondere zylindrischen Axialabschnitt auf, die im montierten Zustand zur Erzeugung der Rastverbindung ineinander greifen. Vorteilhaft sind der mindestens eine Rasthaken und die mindestens eine Rastkante auf einer Innenseite des einen Axialabschnittes bzw. auf einer Außenseite des anderen Axialabschnittes angeordnet. Die beiden ineinandergreifenden Axialabschnitte erzeugen eine präzise Lageausrichtung der beiden Gehäuseteile gegeneinander bei gleichzeitiger gegenseitiger Abdichtung. Unter Ausnutzung ihrer insbesondere radialen Elastizität entsteht eine leicht betätigbare Rastverbindung mit hoher Haltekraft. Diese ist in montiertem Zustand durch die gegenseitige Überlappung der beiden Axialabschnitte nach außen hin abgedeckt und so gegen äußere Einflüsse geschützt. Die Zylinderform erlaubt eine leichte Relativverdrehung für eine Lösung der Rastverbindung.

In einer vorteilhaften Ausführung ist eine Drehsicherung für die beiden Gehäuseteile gegeneinander angeordnet, wobei insbesondere eine selbsttätig beim axialen Verbinden der beiden Gehäuseteile eingreifende Ausführung der Drehsicherung vorgesehen ist. Die Drehsicherung vermeidet ein unbeabsichtigtes Lösen der beiden Gehäuseteile voneinander. Der selbsttätige Eingriff ermöglicht ein axiales Aufstecken des einen Gehäuseteils auf das andere Gehäuseteil, wobei ohne weitere Maßnahmen seitens des Benutzers sowohl die axial wirkende Rastverbindung als auch die Drehsicherung in Eingriff gebracht wird. Selbst bei räumlich beengten Einbaubedingungen ist eine komfortable und einfache Montage unter Vermeidung von Fehlbedienungen möglich.

### Kurze Beschreibung der Zeichnungen

Ein Ausführungsbeispiel der Erfindung ist nachfolgend anhand der Zeichnung näher beschrieben. Es zeigen:

Figur 1 in perspektivischer Darstellung ein erfindungsgemäß ausgeführtes Filtergehäuse am Beispiel eines Luftfiltergehäuses mit montiertem und in Drehrichtung gesichertem Deckelteil,

Figur 2 die Anordnung nach Fig. 1 mit vom feststehenden Gehäuseteil abgenommenem Deckelteil, sowie mit Angaben zur Verbindung, Lösung und Drehsicherung des Deckelteils gegenüber dem feststehenden Gehäuseteil,

Figur 3 in perspektivischer Innenansicht das Deckelteil nach den Fig. 1 und 2 mit Einzelheiten seiner innen liegenden Rasthaken,

Figur 4 eine Seitenansicht des Deckelteils nach den Fig. 1 bis 3 mit entriegelter Drehsicherung.

### Ausführungsform(en) der Erfindung

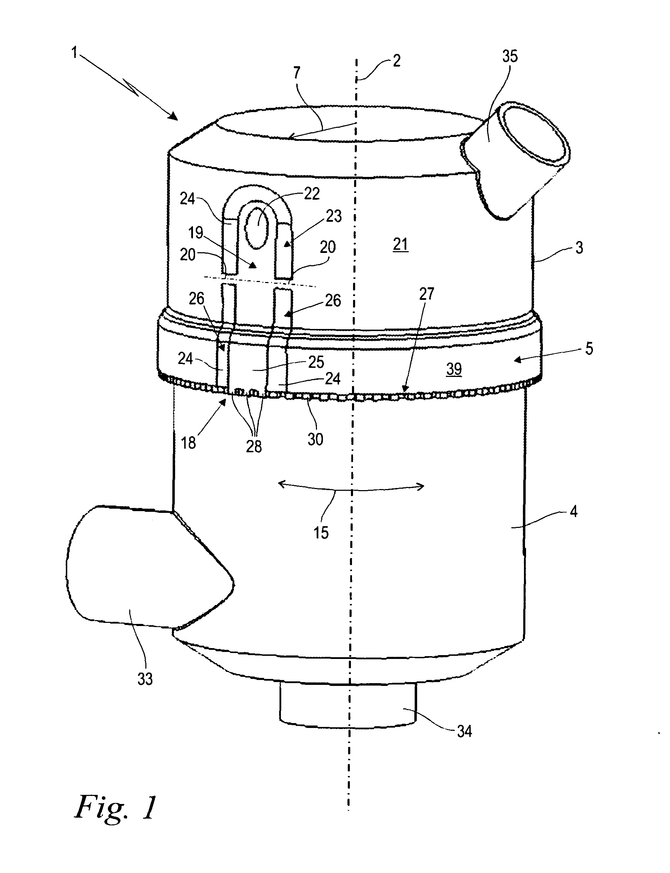

Fig. 1 zeigt in perspektivischer Darstellung ein erfindungsgemäß ausgeführtes Filtergehäuse 1 am Beispiel eines Luftfiltergehäuses eines Kraftfahrzeuges. Das Filtergehäuse 1 ist insgesamt im Wesentlichen zylindrisch ausgeführt und erstreckt sich entlang einer Längsachse 2. Zur Bildung des Filtergehäuses 1 sind zwei lösbar miteinander verbundene Gehäuseteile 3, 4 vorgesehen, die koaxial zur Längsachse 2 angeordnet sind. Durch die etwa zylindrische Bauweise ist eine Radialrichtung 7 und eine Umfangsrichtung 15 vorgegeben.

Das Filtergehäuse 1 nimmt einen nicht dargestellten, auswechselbaren Filterkörper auf. Ein zu reinigender Luftstrom wird auf der Rohseite durch einen Lufteinlass 33 in das Filtergehäuse 1 hineingeführt, vom innenliegenden Filterkörper gereinigt und anschließend koaxial zur Längsachse 2 durch einen Luftauslass 34 reinseitig ausgeleitet. Der Lufteinlass 33 und der Luftauslass 34 sind einteilig am unteren Gehäuseteil 4 angeformt und gemeinsam mit diesem systemfest fixiert. Das vom ortsfest fixierten unteren Gehäuseteil 4 abnehmbare obere Gehäuseteil 3 bildet ein Deckelteil mit einem einteilig angeformten Staubaustragsstutzen 35, an dem im nicht dargestellten Gesamtsystem ein ebenfalls nicht dargestellter Schlauch angeschlossen ist. Bedarfsweise kann im Filterelement zurückgehaltener Staub durch den Staubaustragsstutzen 35 und den angeschlossenen Schlauch aus dem Inneren des Filtergehäuses 1 ausgetragen werden. Bei der Demontage des oberen Gehäuseteils 3 vom unteren Gehäuseteil 4 verbleibt der Schlauch auf dem Staubaustragsstutzen 35. Im demontierten Zustand des oberen Gehäuseteils 3 können Reinigungs- und Wartungsarbeiten und insbesondere ein Austausch des Filterelementes vorgenommen werden. Im gezeigten montierten Zustand hält eine weiter unten im Detail beschriebene Rastverbindung 5 die beiden Gehäuseteile 3, 4 in Richtung der Längsachse 2 wirkend aneinander. Darüber hinaus ist noch eine Drehsicherung 18 vorgesehen, die im gezeigten montierten Zustand eine unbeabsichtigte Relativverdrehung der beiden Gehäuseteile 3, 4 gegen einander um die Längsachse 2 in der Umfangsrichtung 15 verhindert.

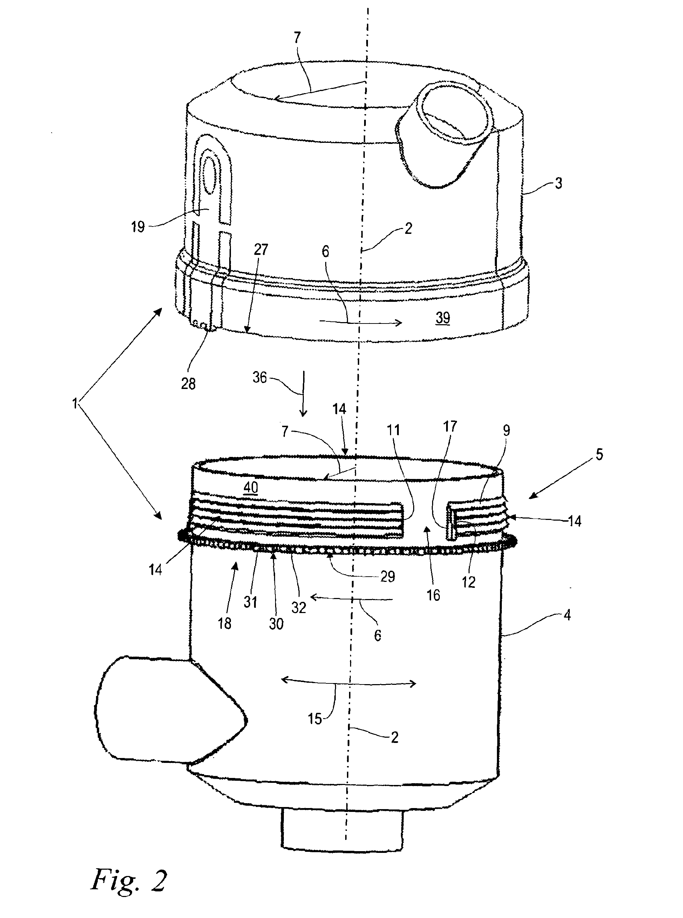

Die Drehsicherung 18 umfasst einen gezahnten Sicherungsring 30, der um die Umfangswand des unteren Gehäuseteils 4 umläuft. Im Bereich einer ebenfalls kreisförmig umlaufenden Gehäusekante 27 übergreift das obere Gehäuseteil 3 mit einem zylinderförmigen Axialabschnitt 39 einen ebenfalls zylinderförmigen, in Fig. 2 dargestellten Axialabschnitt 40 des unteren Gehäuseteils 4, wobei die Gehäusekante 27 des oberen Gehäuseteils 3 axial am Sicherungsring 30 des unteren Gehäuseteils 4 anliegt.

Die Drehsicherung 18 umfasst des Weiteren einen Betätigungshebel 19, dessen Hebelachse 20 tangential zur Umfangskontur des Gehäuseteils 3, also in der Umfangsrichtung 15 verläuft. Der Betätigungshebel 19 ist zusammen mit seiner Hebelachse 20 einteilig und materialeinheitlich mit einer in der Umfangsrichtung 15 umlaufenden, zylindrischen Wand 21 des oberen Gehäuseteils 3 ausgeführt. Der Betätigungshebel 19 ist derart in die Wand 21 des Gehäuseteils 3 integriert, dass seine Außenfläche zumindest näherungsweise mit der Außenfläche der Wand 21 fluchtet. Die Außenfläche des Betätigungshebels 19 ist demnach Teil der zylindrischen Außenkontur der Wand 21.

Der Betätigungshebel 19 erstreckt sich parallel zur Längsachse 2 und weist ein Betätigungsende 22 sowie ein Sicherungsende 25 auf. Das Sicherungsende 25 ist der Gehäusekante 27 bzw. dem angrenzenden Gehäuseteil 4 zugewandt, während das Betätigungsende 22 bezogen auf die Hebelachse 20 dem Sicherungsende 25 gegenüberliegend, also von der Gehäusekante 27 bzw. vom Gehäuseteil 4 abgewandt angeordnet ist.

Zwischen dem Betätigungsende 22 und dem angrenzenden Bereich der Wand 21 ist ein etwa U-förmiger Spalt 23 vorgesehen, dessen beide Schenkel an der Hebelachse 20 enden, und der um die übrige Außenkontur des Betätigungsendes 22 umläuft. Auch zwischen dem Sicherungsende 25 und dem angrenzenden Bereich der Wand 21 sind bezogen auf die Umfangsrichtung 15 beidseitig je ein Spalt 26 angeordnet, wobei beide Spalte 26 parallel zur Längsachse 2 von der Gehäusekante 27 bis zur Hebelachse 20 verlaufen. Sämtliche Spalte 23, 26 sind mit einem Elastomer 24 ausgefüllt. Im gezeigten Ausführungsbeispiel ist das Gehäuseteil 3 einschließlich der Wand 21, des Betätigungshebels 19 und des die Spalte 23, 26 ausfüllenden Elastomers 24 als Zweikomponenten-Spritzgussteil ausgeführt. Es kann auch zweckmäßig sein, anstelle des Elastomers 24 einen elastisch verformbaren, dünnen Wandabschnitt der Wand 21 vorzusehen. Insgesamt ist ein Gehäuseteil 3 bzw. ein Filtergehäuse 1 gebildet, welches insbesondere im Bereich der Drehsicherung 18 bzw. des Betätigungshebels 19 strömungsundurchlässig und hermetisch geschlossen ist.

Am Sicherungsende 25 des Betätigungshebels 19 ist vorteilhaft mindestens ein parallel zur Längsachse 2 sich erstreckender Sicherungsfinger 28 angeordnet. Im gezeigten Ausführungsbeispiel sind insgesamt drei Sicherungsfinger 28 vorgesehen, die parallel zur Längsachse 2 über die Gehäusekante 27 des oberen Gehäuseteils 3 hervorstehen und in weiter unten näher beschriebener Weise in den Sicherungsring 30 formschlüssig eingreifen. Durch diesen formschlüssigen Eingriff können die beiden Gehäuseteile 3, 4 nicht ohne weiteres relativ gegeneinander um die Längsachse 2 verdreht werden.

Fig. 2 zeigt die Anordnung nach Fig. 1 mit vom feststehenden Gehäuseteil 4 abgenommenem oberen Gehäuseteil 3, wobei unter gleichzeitigem Bezug auf Fig. 1 gleiche Merkmale mit gleichen Bezugszeichen versehen sind. Im demontierten Zustand des Gehäuseteils 3 nach Fig. 2 können Wartungsarbeiten am Luftfilter und insbesondere ein Austausch des im Filtergehäuse1 angeordneten, nicht gezeigten Filterelementes vorgenommen werden.

Nach erfolgter Wartungsarbeit wird das obere Gehäuseteil 3 koaxial zur Längsachse 2 entsprechend einem Pfeil 36 auf das untere Gehäuseteil 3 aufgesteckt und über die nachfolgend näher beschriebene, in Richtung der Längsachse 2 wirkende Rastverbindung 5 an diesem befestigt. Hierzu weist das untere Gehäuseteil 4 einen zylindrischen Axialabschnitt 40 auf, der sich in der Axialrichtung vom Sicherungsring 30 bis zur freien Gehäusekante des Gehäuseteils 4 erstreckt. Gegenüber dem zylindrischen Axialabschnitt 40 des unteren Gehäuseteils 4 weist der zylindrische Axialabschnitt 39 des oberen Gehäuseteils 3 einen geringfügig vergrößerten Durchmesser auf, wobei der Innendurchmesser des zylindrischen Axialabschnitts 39 im Wesentlichen dem Außendurchmesser des zylindrischen Axialabschnittes 40 entspricht. Hierdurch kann das obere Gehäuseteil 3 mit seinem Axialabschnitt 39 überlappend auf den zylindrischen Axialabschnitt 40 des unteren Gehäuseteils 4 axial aufgesteckt werden. Anstelle einer zylindrischen Ausgestaltung der Axialabschnitte 39, 40 kann auch eine konische Ausgestaltung zweckmäßig sein.

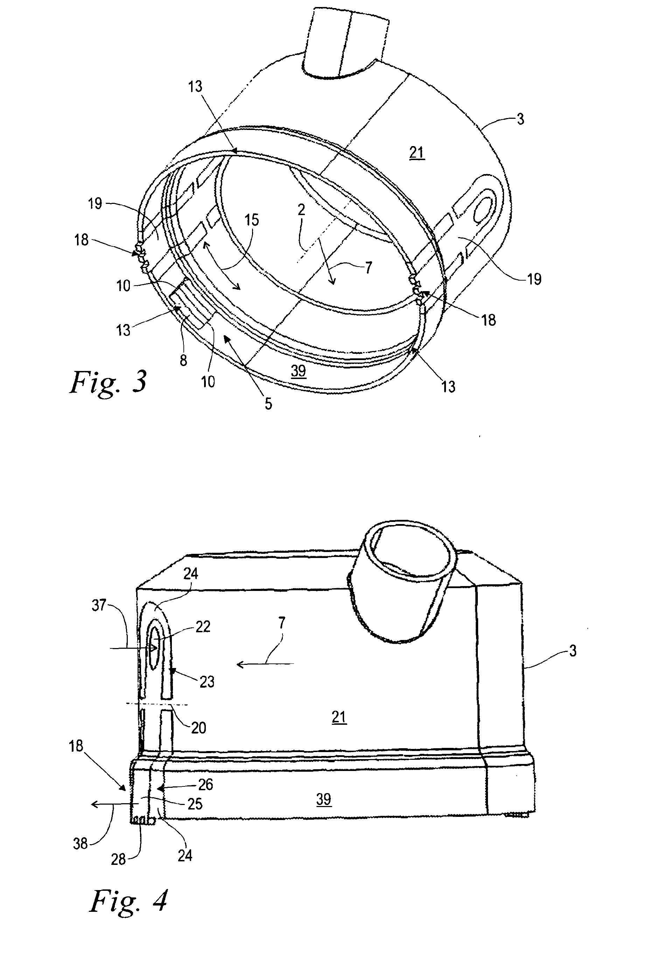

Zur Bildung der Rastverbindung 5 ist mindestens ein in der Radialrichtung 7 elastisch auslenkbarer, in Fig. 3 dargestellter Rasthaken 8 vorgesehen, der mindestens eine zugeordnete Rastkante 9 (Fig. 2) des angrenzenden Gehäuseteils 4 in Richtung der Längsachse 2 wirkend hintergreift. Aus der Zusammenschau der Fig. 2 und 3 ergibt sich, dass mindestens zwei und im gezeigten Ausführungsbeispiel drei gleichmäßig über den Umfang des Filtergehäuses 1 verteilte Gruppen 13, 14 von Rasthaken 8 und zugeordneten Rastkanten 9 vorgesehen sind. Jede Gruppe 13 von Rasthaken 8 umfasst mindestens zwei und im gezeigten Ausführungsbeispiel jeweils vier Rastkanten, die bezogen auf die Längsachse 2 in gleichmäßigen Abständen aufeinanderfolgend angeordnet sind. Die Gruppen 13 von Rasthaken 8 sind auf der Innenseite des Axialabschnittes 39 angeordnet und einteilig mit diesen ausgebildet. Die aus Kunststoff spritzgegossene Wand 21 des Gehäuseteils 3 ist im Bereich des Axialabschnittes 39 mit den Gruppen 13 von Rasthaken 8 derart elastisch ausgebildet, dass sich die Rasthaken 8 bei radialer Belastung in der Radialrichtung 7 elastisch aufweiten können. Die Rasthaken 8 stehen entgegen der Radialrichtung 7 nach innen über die Kontur des Axialabschnittes 39 der Wand 21 derart hervor, dass sie in der Umfangsrichtung 15 beidseitig jeweils ein freies Ende 10 ohne Anschlag oder andere mechanische Begrenzung aufweisen. Dabei erstrecken sich sämtliche Rasthaken 8 bzw. sämtliche Gruppen 13 von Rasthaken 8 bezogen auf die Umfangsrichtung 15 über einen Winkel von etwa 10°.

Der Darstellung nach Fig. 2 ist zu entnehmen, dass auch die Rastkanten 9 entsprechend den Gruppen 13 nach Fig. 3 in einer gleichen Anzahl, hier also in drei Gruppen 14 von Rastkanten 9 angeordnet sind, die ebenfalls gleichmäßig über den Umfang des Filtergehäuses 1 bzw. des Gehäuseteils 4 verteilt und außenseitig des Axialabschnittes 40 des Gehäuseteils 4 einteilig angeformt sind. Jede Gruppe 14 weist in Übereinstimmung mit den Gruppen 13 nach Fig. 3 die gleiche Anzahl, also insgesamt jeweils vier Rastkanten 9 auf, die bezogen auf die Längsachse 2 aufeinander folgend mit gleichem Abstand zueinander angeordnet sind. Bezogen auf die Umfangsrichtung 15 erstrecken sich sämtliche Gruppen 14 von Rastkanten 9 jeweils über einen Winkel von etwa 110°, so dass zwischen den einzelnen Gruppen 14 Freiräume 16 mit einem Winkelmaß in der Umfangsrichtung 15 von etwa 10° verbleiben. Das Winkelmaß der Freiräume 16 weist gegenüber dem Winkelmaß der Gruppen 13 von Rasthaken 8 (Fig. 3) in der Umfangsrichtung 15 ein geringes Übermaß auf.

Sämtliche Rastkanten 9 erheben sich in der Radialrichtung 7 über die zylindrische Umfangskontur des Gehäuseteils 4, wobei es analog zu den Rasthaken nach Fig. 3 zweckmäßig sein kann, bezogen auf die Umfangsrichtung 15 beidseitig jeweils ein freies Ende 11 vorzusehen. Sofern sich die Drehsicherung 18 nicht im Eingriff befindet, erlaubt dies im montierten Zustand eine freie Verdrehung der beiden Gehäuseteile 3, 4 gegeneinander. Im gezeigten Ausführungsbeispiel weist jede Rastkante 9 bzw. jede Gruppe 14 von Rastkanten 9 in der Umfangsrichtung 15 auf einer Seite jeweils ein freies Ende 11 auf, während sie gegenüberliegend durch eine angeformte Rippe zur Bildung von Drehanschlägen 12, 17 begrenzt sind. Analog zur Beschreibung des Gehäuseteils 3 nach Fig. 3 ist auch die Umfangswand des Gehäuseteils 4 im Bereich des Axialabschnittes 40 mit den Rastkanten 9 derart elastisch ausgeführt, dass sich die Rastkanten 9 unter radialer Last entgegen der Radialrichtung 7 geringfügig nach innen zur Längsachse 2 hin eindrücken lassen.

Eine Montage des oberen Gehäuseteils 3 am unteren Gehäuseteil 4 erfolgt entsprechend der Darstellung nach Fig. 2, indem das obere Gehäuseteil 3 in einer gewünschten Drehwinkelstellung entsprechend dem Pfeil 36 auf das untere Gehäuseteil 4 axial aufgeschoben wird. Schrägflächen der Rasthaken 8 (Fig. 3) und der Rastkanten 9 (Fig. 2) bewirken eine radiale Auslenkung, so dass die Rasthaken 8 (Fig. 3) über die Rastkanten gleiten können, bis die Gehäusekante 27 (Fig. 1) des oberen Gehäuseteils 3 am Sicherungsring 30 des unteren Gehäuseteils 4 anliegt. Bei der vorgesehenen Drehwinkelstellung des Gehäuseteils 3 gegenüber dem Gehäuseteil 4 hintergreifen dabei sämtliche Rasthaken 8 (Fig. 3) die zugehörigen Rastkanten 9, wobei nicht näher bezeichnete Sperrflächen der Rasthaken 8 und der Rastkanten 9 das obere Gehäuseteil 3 gegenüber dem unteren Gehäuseteil 4 mit hoher, nicht ohne weiteres lösbarer Haltekraft festhalten. Entsprechend der Darstellung nach Fig. 1 greifen die Axialabschnitte 39, 40 dabei ineinander, wobei der radial äußere Axialabschnitt 39 die Rastverbindung 5 mit den Rasthaken 8 und den Rastkanten 9 überdeckt. Es kann auch zweckmäßig sein, dass die beiden Gehäuseteile 3, 4 im montierten Zustand mit ihren freien Kanten stumpf aufeinander Stoßen und mit entsprechenden axialen Dichtmitteln gegeneinander abgedichtet sind. Die Rastverbindung 5 kann dabei beispielsweise durch Federzungen des einen Gehäuseteils 3, 4 hergestellt sein, die das jeweils andere Gehäuseteil 4, 3 rastend übergreifen. Herstellung und Lösung der Verbindung erfolgen dabei in oben beschriebener Weise.

Der Darstellung nach Fig. 2 ist zu entnehmen, dass der Sicherungsring 30 gleichmäßig über den Umfang verteilte Sicherungsöffnungen 29 aufweist, wobei gleichmäßig über den Umfang verteilte, in der Radialrichtung 7 hervorstehende Zähne 31 des Sicherungsrings 30 vorgesehen und Sicherungsöffnungen 29 durch in der Radialrichtung 7 nach außen offene Zwischenräume zwischen den Zähnen 31 gebildet sind. Die Zähne 31 und die Sicherungsöffnungen 29 sind in ihrer Form und Umfangsverteilung an die Form und Umfangsverteilung der Sicherungsfinger 28 angepasst, so dass im vorstehend beschriebenen montierten Zustand des Gehäuseteils 3 die Sicherungsfinger 28 in die entsprechenden Sicherungsöffnungen 29 eingreifen. Hieraus ergibt sich auch, dass die Drehsicherung 18 für die beiden Gehäuseteile 3, 4 selbsttätig beim axialen Verbinden der beiden Gehäuseteile 3, 4 eingreift: Ohne aktive Betätigung der Betätigungshebel 19 werden die Sicherungsfinger 28 allein durch das axiale Aufstecken des Gehäuseteils 3 auf das Gehäuseteil 4 entsprechend dem Pfeil 36 (Fig. 2) in die Sicherungsöffnungen 29 eingeführt, wodurch die Drehsicherung 18 entsprechend der Darstellung nach Fig. 1 im Eingriff ist und eine unbeabsichtigte Verdrehung der beiden Gehäuseteile 3, 4 gegeneinander verhindert.

Aus der Zusammenschau mit Fig. 3 ist zu erkennen, dass insgesamt zwei diametral sich gegenüberliegende, identisch ausgebildete Betätigungshebel 19 vorgesehen sind, wodurch eine doppelte, gleichmäßig über den Umfang verteilte Drehsicherung 18 gebildet ist. Die im Vergleich zu den zugehörigen Rasthaken 8 in der Umfangsrichtung 15 größere Erstreckung der Rastkanten 9 erlaubt ein Aufstecken des oberen Gehäuseteils 3 auf das untere Gehäuseteil 4 in verschiedenen Winkelstellungen. Die Folge von Zähnen 31 und Sicherungsöffnungen 29 ist unterbrechungsfrei über den Umfang des Sicherungsrings 30 angeordnet, so dass bei jeder gewünschten Drehwinkelstellung die Sicherungsfinger 28 in geeignete Sicherungsöffnungen 29 eingreifen können.

Das Lösen der Drehsicherung 18 ergibt sich aus der Zusammenschau der Fig. 2 und 4: Durch manuellen Druck auf das Betätigungsende 22 des Betätigungshebels 19 entgegen der Radialrichtung 7 wird dieses entsprechend einem Pfeil 37 radial nach innen gedrückt. Die einteilig mit dem Betätigungshebel 19 und der Wand 21 des Gehäuseteils 3 aus Kunststoff spritzgegossene Hebelachse 20 erfährt dabei aufgrund ihrer elastischen Eigenschaften eine Torsionsverformung, in dessen Folge das dem Betätigungsende 22 gegenüberliegende Sicherungsende 25 in der Radialrichtung 7 entsprechend einem Pfeil 38 nach außen bewegt wird. Das im Vergleich zur begrenzten elastischen Nachgiebigkeit des Kunststoffmaterials des Gehäuseteils 3 deutlich weichere, nachgiebigere Elastomer 24 erlaubt eine manuelle Verschwenkung des Betätigungshebels 19 um die Hebelachse 20, wobei die Spalte 23, 26 auch im ausgelenkten Zustand entsprechend der Darstellung nach Fig. 4 abgedichtet bleiben. Da entsprechend der Darstellung nach Fig. 3 zwei identisch ausgebildete Betätigungshebel 19 gegenüberliegend angeordnet sind, können deren beide Betätigungsenden 22 mit einer Hand gleichzeitig eingedrückt werden. Die sich am Sicherungsende 25 befindenden Sicherungsfinger 28 werden aus den in der Radialrichtung 7 offenen Sicherungsöffnungen 29 zwischen den Zähnen 31 herausgehoben, wodurch die Drehsicherung 18 entriegelt ist. Die beiden Gehäuseteile 3, 4 können hierbei gegeneinander verdreht werden.

Eine solche gegenseitige Verdrehung ermöglicht insbesondere, im eingegriffenen Zustand der axialen Rastverbindung 5 eine Drehwinkelkorrektur des als Deckelteil ausgebildeten Gehäuseteils 3 gegenüber dem systemfest montierten Gehäuseteil 4. Zum Auffinden der vorgesehenen Drehwinkelstellung dient insbesondere der Drehanschlag 12 in nachfolgend beschriebener Weise:

Entsprechend der Darstellung nach Fig. 2 ist eine relative Drehrichtung der beiden Gehäuseteile 3, 4 gegeneinander durch ein Paar von Pfeilen 6 angegeben, wobei durch eine Relativverdrehung der beiden Gehäuseteile 3, 4 in dieser Drehrichtung 6 um die Längsachse 2 die Rastverbindung 5 lösbar ist. Wie weiter oben beschrieben, weisen sowohl die Rasthaken 8 (Fig. 3) als auch die Rastkanten 9 (Fig. 2) bezogen auf diese lösende Drehrichtung 6 jeweils ein freies Ende 10, 11 auf. Nach Fig. 2 sind jedoch sämtliche Rastkanten 9 mit entgegen der lösenden Drehrichtung 6 wirkenden Drehanschlägen 12 versehen. Durch Drehung des oberen Gehäuseteils 3 gegenüber dem unteren Gehäuseteil 4 bei entriegelter Drehsicherung 18 werden die in Fig. 3 dargestellten Gruppen 13 von Rasthaken 8 gegen die zugeordneten, in Fig. 2 dargestellten Drehanschläge 12 zur Anlage gebracht. Nach Loslassen der Betätigungshebel 19 drückt die Torsionswirkung der elastisch verformten Hebelachsen 20, unterstützt durch die elastische Federkraft des Elastomers 24 (Fig. 4), die Sicherungsfinger 28 wieder in die zugeordneten Sicherungsöffnungen 29 (Fig. 2), wodurch das Gehäuseteil 3 in seiner vorgesehenen Drehwinkellage gegenüber dem Gehäuseteil 4 entsprechend der Darstellung nach Fig.1 fixiert ist.

Zum Lösen der Verbindung zwischen den beiden Gehäuseteilen 3, 4 wird zunächst die Drehsicherung 18 in vorstehend beschriebener Weise entriegelt. Anschließend führt der Benutzer eine Relativdrehung der beiden Gehäuseteile 3, 4 in der lösenden Drehrichtung 6 herbei. Insbesondere wird bei feststehendem unterem Gehäuseteil 4 das obere Gehäuseteil entsprechend dem zugeordneten Pfeil 6 gedreht, bis die in Fig. 3 dargestellten Gruppen 13 von Rasthaken 8 in Überdeckung mit den Freiräumen 16 zwischen den Gruppen 14 von Rastkanten 9 (Fig. 2) liegen. Zur Auffindung dieser Drehwinkellage ist mindestens ein Freiraum 16 in der lösenden Drehrichtung 6 durch einen Drehanschlag 17 begrenzt. Im gezeigten Ausführungsbeispiel weisen alle drei Freiräume 16 jeweils einen solchen Drehanschlag 17 auf. Das Gehäuseteil 3 wird in der lösenden Drehrichtung 6 so weit gedreht, bis die Gruppen 13 von Rasthaken 8 (Fig. 3) in der lösenden Drehrichtung 6 an den zugeordneten Drehanschlägen 17 anliegen. Dabei kann das obere Gehäuseteil 3 vom unteren Gehäuseteil 4 entgegen dem Pfeil 36 axial abgezogen werden. Das in der Umfangsrichtung 15 geringe Übermaß der Feiräume 16 gegenüber dem zugeordneten Rasthaken 8 erlaubt es, die jeweiligen Gruppen 13 vom Rasthaken 8 (Fig. 3) durch die Freiräume 16 widerstandsfrei abzuziehen.

Es kann auch zweckmäßig sein, auf die beiden Drehanschläge 12, 17 zu verzichten. In diesem Falle weisen die Rastkanten 9 analog zu den beidseitigen freien Enden 10 der Rasthaken 8 nach Fig. 3 in beide Umfangsrichtungen 15 jeweils freie Enden 11 auf. Es sind dann zwei gegenläufige lösende Drehrichtungen 6 gebildet.

Eine weitere vorteilhafte Ausgestaltung kann darin bestehen, die Rastkanten 9 in Vergleich zu den Rasthaken 8 starr auszubilden, wobei eine elastische Verformung zur Herstellung der Rastverbindung 5 im Wesentlichen vollständig durch die Rasthaken 8 bewirkt wird. Des weiteren kann es zweckmäßig sein, die Rasthaken 8 am unteren Gehäuseteil 4 und die Rastkanten 9 am oberen Gehäuseteil 3 vorzusehen. Auch ist es möglich, die Betätigungshebel 19 in das untere, feststehende Gehäuseteil 4 zu integrieren.

## Patentansprüche

1. Filtergehäuse (1) insbesondere eines Luftfilters für Kraftfahrzeuge, welches sich entlang einer Längsachse (2) axial erstreckt und zwei lösbar miteinander verbundene Gehäuseteile (3, 4) umfasst, wobei eine in Richtung der Längsachse (2) wirkende Rastverbindung (5) zwischen den beiden Gehäuseteilen (3, 4) vorgesehen ist, wobei die Rastverbindung (5) in mindestens einer Drehrichtung (6) des einen Gehäuseteils (3) um die Längsachse (2) relativ zum anderen Gehäuseteil (4) in eine Stellung bringbar ist, in der die Gehäuseteile (3, 4) in axialer Richtung lösbar sind, **dadurch gekennzeichnet, dass** zur Bildung der Rastverbindung (5) mindestens ein in einer Radialrichtung (7) elastisch auslenkbarer Rasthaken (8) des einen Gehäuseteils (3) vorgesehen ist, der mindestens eine zugeordnete Rastkante (9) des anderen Gehäuseteils (4) in Richtung der Längsachse (2) wirkend hintergreift, was es ermöglicht, das eine als Deckelteil ausgebildete Gehäuseteil (3) axial, also parallel zur Längsachse auf das weitere Gehäuseteil (4) aufzustecken, wobei mit der axialen Aufsteckbewegung die Rastverbindung eingreift, wobei der mindestens eine Rasthaken (8) und die mindestens eine Rastkante (9) bezogen auf die mindestens eine lösende Drehrichtung (6) jeweils ein freies Ende (10, 11) aufweisen.

2. Filtergehäuse nach Anspruch 1, **dadurch gekennzeichnet, dass** der mindestens eine Rasthaken (8) und/oder die mindestens eine Rastkante (9) einen entgegen der lösenden Drehrichtung (6) wirkenden Drehanschlag (12) aufweisen.

3. Filtergehäuse nach Anspruch 1 oder 2, **dadurch gekennzeichnet, dass** mindestens zwei und insbesondere drei gleichmäßig über den Umfang des Filtergehäuses (1) verteilte Gruppen (13, 14) von Rasthaken (8) und zugeordneten Rastkanten (9) vorgesehen sind, wobei in einer Umfangsrichtung (15) zwischen den Gruppen (13, 14) von Rastkanten (9) Freiräume (16) zur axialen Hindurchführung der Rasthaken (8) angeordnet sind.

4. Filtergehäuse nach Anspruch 3, **dadurch gekennzeichnet, dass** mindestens ein Freiraum (16) in der lösenden Drehrichtung (6) durch einen Drehanschlag (17) begrenzt ist.

5. Filtergehäuse nach einem der Ansprüche 1 bis 4, **dadurch gekennzeichnet, dass** bezogen auf die Längsachse (2) mindestens zwei und insbesondere vier Rasthaken (8) aufeinander folgend angeordnet sind.

6. Filtergehäuse nach einem der Ansprüche 1 bis 5, **dadurch gekennzeichnet, dass** bezogen auf die Längsachse (2) mindestens zwei und insbesondere vier Rastkanten (9) aufeinander folgend angeordnet sind.

7. Filtergehäuse nach einem der Ansprüche 1 bis 6, **dadurch gekennzeichnet, dass** die Rastkanten (9) bezogen auf die Umfangsrichtung (15) eine größere Erstreckung aufweisen als die zugehörigen Rasthaken (8).

8. Filtergehäuse nach Anspruch 7, **dadurch gekennzeichnet, dass** sich die Rasthaken (8) und die zugehörigen Freiräume (16) zwischen den Rastkanten (9) bezogen auf die Umfangsrichtung (15) über einen Winkel von etwa 10° erstrecken, wobei die Freiräume (16) gegenüber den Rasthaken (8) ein geringes Übermaß aufweisen.

9. Filtergehäuse nach einem der Ansprüche 1 bis 8, **dadurch gekennzeichnet, dass** die beiden Gehäuseteile (3, 4) je einen insbesondere zylindrischen Axialabschnitt (39, 40) aufweisen, die im montierten Zustand zur Erzeugung der Rastverbindung (5) ineinander greifen, wobei vorteilhaft der mindestens eine Rasthaken (8) und die mindestens eine Rastkante (9) auf einer Innenseite des Axialabschnittes (39) bzw. auf einer Außenseite des Axialabschnitts (40) angeordnet sind.

10. Filtergehäuse nach einem der Ansprüche 1 bis 9, **dadurch gekennzeichnet, dass** eine Drehsicherung (18) für die beiden Gehäuseteile (3, 4) gegeneinander angeordnet ist, wobei insbesondere eine selbsttätig beim axialen Verbinden der beiden Gehäuseteile (3, 4) eingreifende Ausführung der Drehsicherung (18) vorgesehen ist.

## Claims

1. Filter housing (1), in particular of an air filter for motor vehicles which extends axially along a longitudinal axis (2) and comprises two housing components (3, 4) detachably connected with each other, a snap-in connection (5) acting in the direction of the longitudinal axis (2) being provided between the two housing components (3, 4), the snap-in connection (5) being - in at least one rotational direction (6) of one housing component (3) - brought around the longitudinal axis (2) in relation to the other housing component (4) into a position in which the housing components (3, 4) can be detached in axial direction, **characterized in that** at least one locking hook (8) elastically deflectable in one radial direction (7) of one housing component (3) being provided for forming the snap-in connection (5), which engages actively behind at least one corresponding locking edge (9) of the other housing component (4) in the direction of the longitudinal axis (2) which makes it possible to attach the housing component (3) designed as cover part axially, which means parallel to the longitudinal axis, on the other housing component (4), the snap-in connection engaging with the axial attaching movement, the at least one locking hook (8) and the at least one locking edge (9) featuring - in relation to the at least one detaching rotational direction (6) - a free end (10, 11) each.

2. Filter housing according to claim 1, **characterized in that** the at least one locking hook (8) and/or the at least one locking edge (9) feature a rotary stop (12) acting against the detaching rotational direction (6).

3. Filter housing according to claim 1 or 2, **characterized in that** at least two and in particular three groups (13, 14) of locking hooks (8) and corresponding locking edges (9) are arranged uniformly over the circumference of the filter housing (1), in one circumferential direction (15) clearances (16) for the axial insertion of the locking hooks (8) being arranged between the groups (13, 14) of locking edges (9).

4. Filter housing according to claim 3, **characterized in that** at least one clearance (16) in the detaching rotational direction (6) is limited by a rotary stop (12).

5. Filter housing according to one of the claims 1 to 4, **characterized in that**, in relation to the longitudinal axis (2), at least two and in particular four locking hooks (8) are disposed following one another.

6. Filter housing according to one of the claims 1 to 5, **characterized in that**, in relation to the longitudinal axis (2), at least two and in particular four locking hooks (9) are disposed following one another.

7. Filter housing according to one of the claims 1 to 6, **characterized in that** the locking edges (9) in relation to the circumferential direction (15) feature a longer extension than the corresponding locking hooks (8).

8. Filter housing according to claim 7, **characterized in that** the locking hooks (8) and the corresponding clearances (16) between the locking edges (9) extend, in relation to the circumferential direction (15), over an angle of approx. 10°, the clearances (16) being slightly oversized compared with the locking hooks (8).

9. Filter housing according to one of the claims 1 to 8, **characterized in that** both housing components (3, 4) feature each an axial section (39, 40) in particular with a cylindrical shape which - in an assembled state - engage with each other for realizing the snap-in connection (5), the at least one locking hook (8) and the at least one locking edge (9) being advantageously disposed at one interior side of the axial section (39) or at one exterior side of the axial section (4).

10. Filter housing according to one of the claims 1 to 9, **characterized in that** a rotary protection (18) for both housing components (3, 4) are opposed to each other, in particular an automatically engaging configuration of the rotary protection (18) being provided during the axial connection of both housing components (3, 4).

## Revendications

1. Boîtier de filtre (1), en particulier d'un filtre à air pour véhicules automobiles, qui s'étend en sens axial le long d'un axe longitudinal (2) et comprend deux parties de boîtier (3, 4) assemblées l'une à l'autre de manière amovible, une liaison par encliquetage (5) agissant en direction de l'axe longitudinal (2) étant prévue entre les deux parties du boîtier (3, 4), la liaison par encliquetage (5) pouvant, dans au moins un sens de rotation (6) de l'une des parties du boîtier (3), être amenée, dans une position, sur l'axe longitudinal (2), par rapport à l'autre partie du boîtier (4), dans laquelle les parties du boîtier (3, 4) peuvent être détachées en sens axial, **caractérisé en ce que**, pour former la liaison par encliquetage (5), il est prévu au moins un crochet encliquetable (8) extensible de manière élastique dans un sens radial (7) de l'une des parties du boîtier (3), ce crochet s'accrochant derrière au moins un bord d'encliquetage correspondant (9) de l'autre partie du boîtier (4) en direction de l'axe longitudinal (2), ce qui permet de monter une partie du boîtier (3) conçue comme partie du couvercle en sens axial, donc en parallèle à l'axe longitudinal, sur l'autre partie du boîtier (4), la liaison par encliquetage s'enclenchant lors du mouvement de montage axial, le crochet encliquetable (8), au nombre d'au moins un, et le bord d'encliquetage (9), également au nombre d'au moins un, présentant respectivement une extrémité libre (10, 11), par rapport au sens de rotation de desserrage (6), au nombre d'au moins un.

2. Boîtier de filtre selon la revendication 1, **caractérisé en ce que** le crochet encliquetable (8), au nombre d'au moins un, et/ou le bord d'encliquetage (9), également au nombre d'au moins un, présentent une butée de rotation (12) agissant dans le sens inverse du sens de rotation de desserrage (6).

3. Boîtier de filtre selon la revendication 1 ou 2, **caractérisé en ce qu'**au moins deux, et en particulier trois groupes (13, 14) de crochets encliquetables (8) et de bords d'encliquetage (9) correspondants répartis uniformément sur la circonférence du boîtier de filtre (1) sont prévus, des espaces libres (16) étant disposés dans un sens circonférentiel (15) entre les groupes (13, 14) de bords d'encliquetage (9) afin de faire passer les crochets encliquetables (8) en sens axial.

4. Boîtier de filtre selon la revendication 3, **caractérisé en ce qu'**au moins un espace libre (16) est limité par une butée de rotation (17) dans le sens de rotation de desserrage (6).

5. Boîtier de filtre selon l'une des revendications 1 à 4, **caractérisé en ce que**, par rapport à l'axe longitudinal (2), au moins deux et en particulier quatre crochets encliquetables (8) sont disposés les uns à la suite des autres.

6. Boîtier de filtre selon l'une des revendications 1 à 5, **caractérisé en ce que**, par rapport à l'axe longitudinal (2), au moins deux et en particulier quatre bords d'encliquetage (9) sont disposés les uns à la suite des autres.

7. Boîtier de filtre selon l'une des revendications 1 à 6, **caractérisé en ce que** les bords d'encliquetage (9), considéré dans le sens circonférentiel (15), s'étendent plus loin que les crochets encliquetables (8) correspondants.

8. Boîtier de filtre selon la revendication 7, **caractérisé en ce que** les crochets encliquetables (8) et les espaces libres correspondants (16) situés entre les bords d'encliquetage (9) s'étendent, considéré dans le sens circonférentiel (15), sur un angle d'env. 10°, les espaces libres (16) ayant une surmesure légèrement plus grande comparée aux crochets encliquetables (8).

9. Boîtier de filtre selon l'une des revendications 1 à 8, **caractérisé en ce que** les deux parties de boîtier (3, 4) présentent chacune une section axiale particulièrement cylindrique (39, 40) et que, en position montée, ces sections s'enclenchent l'une dans l'autre pour former la liaison par encliquetage (5), et, de préférence, le crochet encliquetable (8), au nombre d'au moins un, et le bord d'encliquetage (9), également au nombre d'au moins un, étant disposés sur un côté intérieur de la section axiale (39) ou sur un côté extérieur de la section axiale (40).

10. Boîtier de filtre selon l'une des revendications 1 à 9, **caractérisé en ce qu'**un élément anti-rotation (18) est disposé, respectivement face à face, pour les deux parties du boîtier (3, 4), une version d'élément anti-rotation (18) s'enclenchant automatiquement lors de l'assemblage axial des deux parties du boîtier (3, 4) étant en particulier prévue.
